# EUROPÄISCHE PATENTANMELDUNG

(11) **EP 0 674 127 A1**
(43) Veröffentlichungstag der Anmeldung: **27.09.1995**
(21) Anmeldenummer: 95200647.6
(22) Anmeldetag: 17.03.1995
(51) Int. Cl.: F16K 5/06

(54) **Kugelhahn für Rorhleitungen**

(30) Priorität: 22.03.1994 DE 4409796
(71) Anmelder: K+H Armaturen GmbH, D-75038 Oberderdingen (DE); Goldsweer, Karl Wilhelm, D-26826 Weener/Ems (DE)
(72) Erfinder: Goldsweer, Karl Willem, D-26826 Weener/Ems (DE)
(74) Vertreter: Fieret, Johannes, Ir.

(57) **Zusammenfassung**

Die Erfindung bezieht sich auf ein umweltfreundliches Absperrventil für die Durchleitung insbesondere temperatur- und bewegungsempfindlicher flüssiger Stoffe, Chemikalien, Dispersionen, Lebensmitteln, Milch und dergleichen. Das aus Edelstahl gefertigte und mit für die unterschiedlichen Medien zugelassenen Dichtungswerkstoffen ausgestattete Ventil ermöglicht einen hohen turbulenzarmen Durchsatz bei Vermeidung von nachteiliger Ansatzbildung. Das totraumfreie Absperrventil besteht nur aus drei verschiedenen Teilen und ist mechanisch einwandfrei ohne aggressive, umweltbelastende Reinigungsmittel zu reinigen. Ein Dichtungswechsel ist äußerst schnell und einfach durchführbar.

## Beschreibung

Die Erfindung betrifft ein Absperrventil für Rohrleitungen, insbesondere für Flüssigkeitsbehälter mit einem wenigstens um 90° schwenkbaren Verschlußkörper und einer quer zur Schwenkachse angeordneten Durchlaufbohrung zum Öffnen und Schließen des gesamten lichten Durchlaufquerschnitts, wobei der Verschlußkörper in der Höhe des Durchlaufquerschnitts quer zur Längsachse zu einer Seite materialfrei ausgebildet ist, eine sogenannte C-Form aufweist.

Kugel-Ventilhähne bekannter Art mit quer zur Schwenkrichtung eingearbeiteten Durchlaßbohrungen zum Öffnen und Schließen des Ventils, wobei der gesamte Querschnitt des lichten Durchlaufs freigegeben ist, haben gegenüber den bekannten Klappenventilen den großen Vorteil, daß bei geöffnetem Ventil eine weitgehend laminare, turbulenzarme Strömung erreicht werden kann. Eine unerwünschte Ansatzbildung an den im Durchflußquerschnitt befindlichen Ventilteilen wird dadurch weitgehend vermieden.

Der große Nachteil besteht aber bei Kugelventilen dieser Art darin, daß bei geschlossenem Kugelhahn eine Restmenge des flüssigen Mediums im Durchflußteil der verschließenden Kugel verbleibt und es hier zu nachteiliger Ansatzbildung kommt. Die Entfernung dieser eingeschlossenen Restmenge ist nicht möglich und eine mechanische Reinigung des Ventils ist bei geschlossenem Kugelhahn daher ausgeschlossen.

Aus der DE-OS 23 18 476 ist ein kugelförmiges Drehabsperrventil bekannt, welches u-förmig, also quer zur Längsachse an einer Seite materialfrei, ausgebildet ist. Diese Ausbildung soll bei nuklearem Wasserbetrieb den Ausbau eines solchen Verschlußkörpers bei einem in einer Rohrleitung eingeschweißten Absperrventil ermöglichen. Durch den allein abdichtenden im Kugelsegment eingearbeiteten Dichtungsring ergeben sich neben dem Durchflußquerschnitt erhebliche Toträume zwischen dem Absperrventil und dem Gehäuse. Diese erzeugen nicht nur eine erhebliche schädliche Turbulenz, sondern verstopfen diese Toträume, zum Beispiel bei Milchprodukten oder anderen zu Ansatz neigenden Medien, die nicht mehr durch eine Spülreinigung entfernt werden können. Diesem bekannten Absperrventil stellt sich das Problem gemäß der Aufgabenstellung der vorliegenden Erfindung, nämlich den Durchfluß empfindlicher zu Ansatz neigenden flüssigen Medien zu verbessern, überhaupt nicht und ist hierfür ungeeignet.

Der weitere Nachteil besteht bei diesen bekannten Ventilen darin, daß die Konstruktion zu aufwendig ist, mit einem komplizierten Gehäuse für die Lagerung des Betätigungsspindels, der beiden dichtenden Halbschalen für die Kugel und den zusätzlichen Seitenschalen, die wiederum gegen die Dichthalbschalen mit weiteren Dichtungselementen, wie Kontaktringen, abgedichtet sind. Es hat sich gezeigt, daß bei empfindlichen flüssigen Medien im Bereich der beiden Dichtungen, zum Beispiel bei Milchprodukten, Ablagerungen nicht zu vermeiden sind. Selbst bei Anwendung aggressiver Reinigungsmittel sind derartige Ansätze nur schwer zu entfernen und die erforderliche Keimfreiheit kann ohne Anwendung umweltbelastender Desinfektionsmittel kaum erreicht werden.

Außerdem ist das Gehäuse zu aufwendig und ferner erfordert ein derartiger Kugelhahn mit den relativ harten Halbschalen eine sehr präzise und arbeitsaufwendige Bearbeitung mit kleinsten Toleranzen, um eine ausreichende Abdichtung zu erzielen. Ferner ist bei dieser Konstruktion eine ebenso aufwendige, kompakte Abdichtung des Spindels für die Ventilbetätigung erforderlich, da sonst, insbesondere bei hoher Strömungsgeschwindigkeit des geförderten Mediums, über die Spindeldichtung Luft in die Förderleitung hineingesaugt werden kann, da die bekannten Halbschalen-Dichtungen zwar toleranzarm gefertigt, aber nicht gasdruckdicht ausgebildet sind.

Für den Flüssigtransport von bestimmten bewegungs- und temperaturempfindlichen Stoffen und Substanzen ergeben sich bei diesem Kugelhahn aber Schwierigkeiten, zum Beispiel beim Flüssigtrausport von thixotropen Stoffen, die durch Bewegungsenergie oder in Ruhe zu Verklumpung und Ansatz neigen. Ferner ist von großem Nachteil, daß der Durchlaufquerschnitt relativ klein ist zur Kugelgröße und somit bei gleicher Durchsatzmenge eine höhere Strömungsgeschwindigkeit erforderlich ist, die starke Turbulenzen bewirkt. Das führt bei Dispersionen zu nachteiliger Ansatzbildung. Der erforderliche Durchfluß des Mediums ist dann nicht mehr gewährleistet und es können sich hierdurch im Produktionsablauf erhebliche Störungen einstellen. Außerdem bedingt der nur klein auslegbare Durchlaufquerschnitt eine relativ große unpraktische Konstruktion mit hohem Materialaufwand.

Aus dem Prospekt der Firma Neotecha AG, CH-8634 Hornbrechtikon ist ein Absperrventil mit einem sogenannten C-Hahn bekannt, das bereits zwei identisch ausgebildete Gehäuseteile aufweist. Der zwischen den beiden Gehäusehälften gehaltene C-Kugelhahn ist, wie bei den üblichen bekannten Kugelventilen in der Durchflußachse jeweils an beiden Seiten lediglich von einem nicht nachstellbaren ringartigen Kugelsitz und bzw. einem Keilring gehalten und abgedichtet. Beim geöffnetem C-Hahn fließt das Medium folglich an der materialfreien Seite der C-Form zwischen den beiden Dichtungsringen (3a und 3b) in die so gebildeten Toträume rund um den gesamten C-Hahn herum bis hinauf zur Wellendichtung., wobei die Ansatzbildung bei feststoffhaltigen Produkten rund um den C-Hahn unvermeidbar ist.

Ein weiteres Indiz dafür, daß der C-Hahn nicht völlig abgedichtet ist, zeigt die technisch sehr aufwendige Wellenabdichtung, die bei allen Kugelventilen notwendig ist. Beim Erfindungsgegenstand ist durch die völlige Abdichtung des kugelförmigen Abschlußorgans eine solche aufwendige Wellenabdichtung nicht mehr erforderlich.

Eine für Lebensmittel erforderliche Sterilität kann daher mit diesem bekannten Absperrventil nicht erreicht werden.

Im übrigen entspricht diese Abdichtungsart dem bekannten Stand der Technik mit allen beschriebenen Nachteilen von dem die vorliegende Erfindung ausgeht, nämlich, diese Toträume zwecks Erhaltung einer hohen Sterilität und besseren Reinigungsmöglichkeit zu vermeiden.

Für den Transport von flüssigen Lebensmitteln sind diese bekannten Absperrventile trotz sauberer Edelstahlverarbeitung und Verwendung von lebensmittelzulässigem Dichtungsmaterial in vielen Fällen aus den vorbeschriebenen Gründen, wie bei Milch, ungeeignet, da bei ungünstiger Temperatur und Bewegungsenergie Fettablagerungen beziehungsweise Butterbildung im Ventilgehäuse nicht zu vermeiden sind.

Es hat sich gezeigt, daß alle Ventile dieser bekannten Art auf mechanischem Wege ohne die Verwendung von umweltfeindlichen Lösungs- und Reinigungsmitteln nur schwer und im geschlossenen Zustand des Ventils überhaupt nicht zu reinigen sind. Die Anwendung aggressiver Reinigungs- und Dessinfektionsmittel ist hierbei unumgänglich, die eine hohe Umweltbelastung darstellen. In vielen Fällen muß ein solches bekanntes Absperrventil zwecks Reinigung sogar in aufwendiger Weise zusätzlich zerlegt werden.

Der Erfindung liegt daher die Aufgabe zugrunde, ein Absperrventil eingangs genannter Art zu entwickeln, bei dem die vorbeschriebenen Nachteile behoben werden. Bei einem derartigen Absperrventil soll das Eindringen und Verbleiben der flüssigen Medien in Toträumen des Ventils und die damit verbundene nachteiliege Ansatzbildung bei Milchprodukten und thixotropen Stoffen vermieden werden. Ferner soll ein derartiges Absperrventil in geschlossener Stellung von beiden Seiten durch mechanische Spülung einwandfrei zu reinigen sein.

Der Erfindung stellt sich die weitere Aufgabe, die bisher aufwendige Herstellung der Absperrventile, zum Beispiel mit komplizierten Gehäuseteilen für die Wellenlagerung und die hierfür benötigten präzisen Wellen-Dichtungen, zu vereinfachen, die Anzahl der Einzelteile zu verringern und die Abdichtungen zu verbessern, wobei eine schnellere und einfache Montage und Austauschbarkeit aller Verschleißteile gewährleistet ist.

Die Aufgabe wird bei einem Absperrventil eingangs beschriebener Gattung erfindungsgemäß mit den kennzeichnen Merkmalen des Anspruchs 1 gelöst.

Ein mit diesen Merkmalen ausgestattetes Absperrventil ermöglicht durch die strömungsgünstige Gestaltung einen laminaren Medienfluß, wobei auch in abgesperrter Stellung eine einwandfreie mechanische Reinigung von beiden Strömungsrichtungen möglich ist. Der kugelförmige Verschlußkörper mit der völlig umschließenden toleranzfreien Abdichtung gewährleistet eine bisher nicht bekannte optimale Abdichtung und eine leichte Betätigung durch die schwimmende Lagerung, wobei durch die vorteilhafte konstruktive Gestaltung mit wenigen Teilen auch keine nachteiligen Toträume mehr vorhanden sind.

Weitere vorteilhatte Ausgestaltungen der Erfindung sind Gegenstand der Unteransprüche.

Anhand von Ausführungsbeispielen wird die Erfindung in den Zeichnungen näher erläutert. Diese zeigen in
- Figur 1: eine Explosionszeichnung des Absperrventils,
- Figur 2: eine Einzelzeichnung des Verschlußkörpers,
- Figur 3: eine weitere Ausbildung der Dichtungsschalen,
- Figur 4: ein zusammengesetztes Absperrventil nach Figur 1.

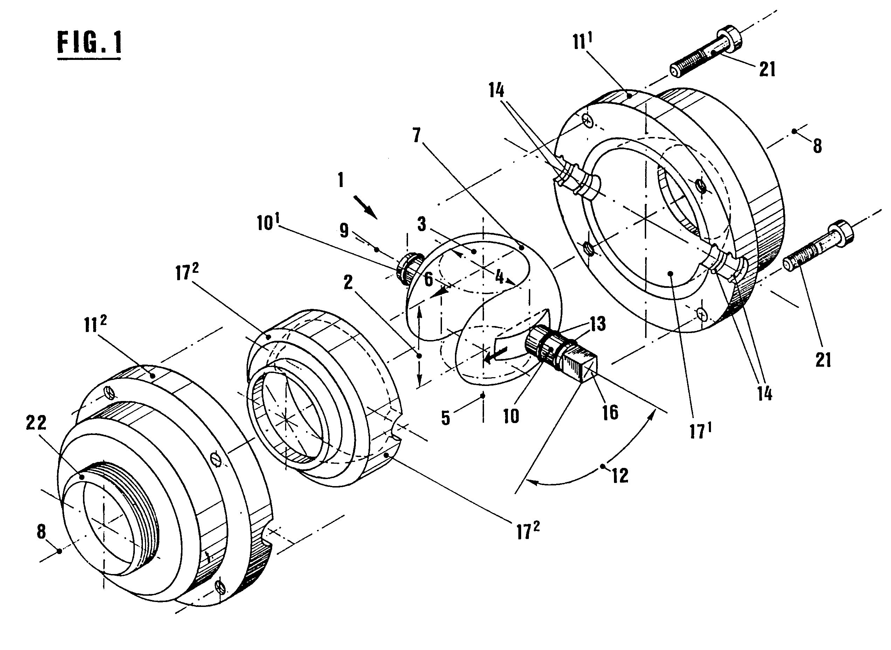

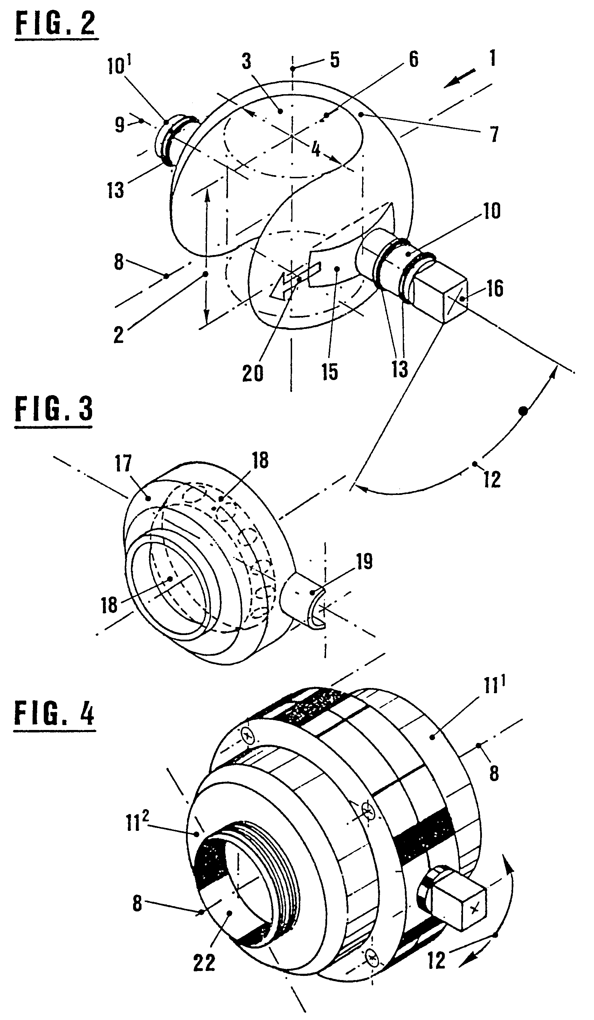

Die Figur 1 zeigt das erfindungsgemäße Absperrventil in einer Explosionszeichnung. Der kugelförmige Verschlußkörper 1, - in der Figur 2 vergrößert dargestellt-, ist in der Höhe 2 des Durchaufquerschnitts 3 und in der entsprechenden Breite, des Durchmessers 4 quer zur Durchflußachse 5 zu einer Seite in Pfeilrichtung 6 materialfrei ausgebildet. Die verbliebende Außenwandung des Verschlußkörpers 1 bildet die Abschlußfläche 7, die hier in absperrender Stellung zur Strömungsachse 8 ausgerichtet ist. In der Drehachse 9 ist zum Öffnen und Schließen des Absperrventils in Pfeilrichtung 12 am Verschlußkörper 1 ein Schwenkzapfen 10 mit einem aus dein Gehäuse 11 herausragendem Vierkantansatz 16 für die Betätigung angeordnet, zum Beispiel für einen Handgriff oder für eine maschinelle Kupplung.

Die Schwenkzapfen 10, 10¹ sind mit O-Ringen 13 versehen, die in die hierfür vorgesehenen Ausnehmungen 14 des Gehäuses 11 eingreifen. Der Schwenkzapfen 10 ist in an sich bekannterweise mit einem Schaltknebel 15 versehen, der im Verschlußkörper 1 lose eingesteckt und in Pfeilrichtung 20 verschiebbar ist. Dadurch wird eine klemmfreie Lagerung des Verschlußkörpers 1 und des Schwenkzapfens 10, sowie eine reibungsarme Betätigung über den Vierkantansatz 16 erreicht.

Auf den gegenüberliegenden Schwenkzapfen 10¹ kann gegebenenfalls verzichtet werden, da der Verschlußkörper 1 in der völlig umgebenden, toleranzfreien, weichen Dichtung 17 optimal geführt wird und der Schaltknebel 15 sich nicht aus dem Verschlußkörper 1 entfernen kann.

Die Abdichtung und Lagerung des Verschlußkörpers 1 erfolgt über zwei identische Dichtungsschalen 17¹ und 17², die, - je nach dein Weichheitsgrad des verwendeten Dichtungswerkstoffs -, mit einem eingearbeiteten Trägerkörper 18 aus rostfreiem Stahl ausgestattet sind, wie aus der Figur 3 ersichlich ist. Eine derartige Dichtungsschale 17¹ ist bereits in dem Gehäuseteil 11¹ vorhanden, in der der Verschlußkörper 1 eingesetzt werden kann.

Die Dichtungsschalen 17¹ und 17² bilden im zusammengesetzten Zustand zusammengepreßt eine einstückige Funktion und umschließen dichtend vor den O-Ringen 13 auch die Schwenkzapfen 10 und 10¹. Die Dichtungsschalen 17 können, wie aus der Figur 3 ersichtlich, einheitlich mit Lageransätzen 19 ausgestattet sein, die gleichzeitig sowohl die Lagerung, als auch die Abdichtung der Schwenkzapfen 10 und 10¹ ermöglichen. Das hat den besonderen Vorteil, daß man auf O-Ringe und/oder sonstige Mittel für die Lagerung und Abdichtung der Schwenkzapfen verzichten kann und sich alle Bearbeitungsmaßnahmen hierfür in vorteilhafter Weise erübrigen.

Eine so einfache Abdichtung ist wegen der toleranzfreien Lagerung des Verschlußkörpers 1 in den weichen Dichtungsschalen 17 möglich, weil dadurch eine gasdichte Lagerung des Verschlußkörpers gewahrleistet ist und bei hoher Durchsatzgeschwindigkeit des Mediums und dadurch entstehender Unterdruck keine Luft durch die Schwenkzapfenlagerung in den Förderstrom angesaugt werden kann.

In vorteilhafter Weise wird ferner durch einfachen Austausch der Dichtungsschalen 17 für den Verschlußkörper 1 gleichzeitig die Lagerung und Abdichtung der Schwenkzapfen 10 erneuert.

Nach den Einsetzen des Verschlußkörpers 1 in das mit der Dichtungsschale 17¹ versehene Gehäuseteil 11¹ wird das Gehäuseteil 11² mit der Dichtungsschale 17² auf den Verschlußkörper 1 aufgesetzt und miteinander mittels der Schrauben 21 verbunden. Damit ist das erfindungsgemäße Absperrventil, bestehend aus nur drei verschiedenen Teilen, dem Gehäuseteil 11, der Dichtungsschale 17 und dem Verschlußkörper 1 mit dem Schwenkzapfen, betriebsfertig. Das Absperrventil kann dann mittels des am Gehäuse 11 befindlichen Gewindestutzens 22 in der vorgesehenen Rohrleitung oder an einem Behälter eingebaut werden.

Anstatt des Gewindestutzens 22 kann das Gehäuse 11 serienmäßig auch mit anderen gebräuchlichen, beziehungsweise genormten Anschlußelementen ausgestattet werden.

### Teileverzeichnis

- 1: Verschlußkörper
- 2: Höhe der Durchlaufquerschnitt
- 3: Durchlaufquerschnitt
- 4: Durchmesser
- 5: Durchflußachse
- 6: Pfeilrichtung
- 7: Abschlußfläche
- 8: Strömungsachse
- 9: Drehachse
- 10: Schwenkzapfen
- 11: Ventilgehäuse
- 12: Pfeilrichtung
- 13: O-Ringe
- 14: Ausnehmung
- 15: Schaltknebel
- 16: Vierkantansatz
- 17: Dichtungsschale
- 18: Trägerkörper
- 19: Lageransatz
- 20: Pfeilrichtung
- 21: Schrauben
- 22: Gewindestutzen

## Patentansprüche

1. Absperrventil für Rohrleitungen, insbesondere für Flüssigkeitsbehälter mit einem wenigstens um 90° schwenkbaren Verschlußkörper und einer quer zur Schwenkachse angeordneten Durchlaufbohrung zum Öffnen und Schließen des gesamten lichten Durchlaufquerschnitts, wobei der Verschlußkörper in der Höhe des Durchlaufquerschnitts quer zur Längsachse zu einer Seite materialfrei ausgebildet ist, **dadurch gekennzeichnet**, daß der kugelförmige Verschlußkörper (1) bis auf den Durchlaufquerschnitt (3) der Strömungsachse (8) völlig von den umfassenden Dichtungsschalen (17) umschlossen und zwischen diesen gleitend gelagert ist, derart, daß die zur entgegengesetzten Seite weisenden, verbliebenden Außenwandung des Verschlußkörpers (1) allein die dichtende Abschlußfläche (7) des lichten Durchlaufquerschritts (3) in der Strömungsachse (8) bildet und die Dichtungsschalen (17) von einem aus zwei identischen radial ausgebildeten Gehäuseteilen (11¹, 11²) bestehenden Ventilgehäuse (11) umschlossen und mittels an sich bekannter Befestigungsmittel, zum Beispiel mittels Schrauben (21), miteinander verbindbar sind.

2. Absperrventil nach Anspruch 1, **dadurch gekennzeichnet**, daß die den Verschlußkörper (1) gänzlich umfassenden und im zusammengesetzten Zustand einheitlich wirkenden Dichtungsschalen (17) aus zwei identischen Dichtungshalbschalen (17¹, 17²) bestehen.

3. Absperrventil nach Anspruch 1 und 2, **dadurch gekennzeichnet**, daß die Dichtschalen (17) aus weichem, elastischem Material wie Kunststoff oder Gummi, zum Beispiel aus Silikon-Naturkautschuk (VQM), hergestellt sind.

4. Absperrventil nach Anspruch 1 bis 3, **dadurch gekennzeichnet**, daß die Dichtschalen (17) mit einem innenliegenden starren Trägerkörper (18), zum Beispiel in Form eines Edelstahlringes, ausgestattet sind.

5. Absperrventil nach Anspruch 1 bis 4, **dadurch gekennzeichnet**, daß in Richtung der Drehachse (9) am Verschlußkörper (1) mindestens zur einen Seite ein durch das Ventilgehäuse (11) nach außen durchgeführter Schwenkzapfen (10) angeordnet ist.

6. Absperrventil nach Anspruch 1 bis 8, **dadurch gekennzeichnet**, daß der oder die Schwenkzapfen (10, 10¹) mit achsführenden und/oder achsabdichtenden Mitteln, zum Beispiel in Form von O-Ringen (13), in den Ausnehmungen (14) eingesetzt sind.

7. Absperrventil nach Anspruch 1 bis 6, **dadurch gekennzeichnet**, daß die achsführenden und/oder die achsabdichtenden Mittel für die Aufnahme der Schwenkzapfen (10, 10¹) durch die erweiterte, einstückige Ausgestaltung der Dichtungsschalen (17) mit entsprechend gefertigten Lageransätzen (19) gebildet sind.

8. Absperrventil nach Anspruch 1 bis 7, **dadurch gekennzeichnet**, daß der kugelförmig ausgebildete Verschlußkörper (1) mit einem lose in eine entsprechende Ausnehmung einsteckbaren und in Pfeilrichtung (20) verschiebbaren Schaltknebel (15) des Schwenkzapfens (10) verbunden ist.

9. Absperrventil nach Anspruch 1 bis 8, **dadurch gekennzeichnet**, daß der Schwenkzapfen (10) mit einem aus dein Ventilgehäuse (11) herausragenden Anschlußteil, zum Beispiel mit einem Vierkantansatz (16), ausgestattet ist.

10. Absperrventil nach Anspruch 1 bis 9, **dadurch gekennzeichnet**, daß der Verschlußkörper (1) aus nichtrostendem Stahl, Edelstahl, zum Beispiel aus V 4A, gefertigt ist.

11. Absperrventil nach Anspruch 1 bis 10, **dadurch gekennzeichnet**, daß der Verschlußkörper (1) aus einem keramischen Material gefertigt ist.

12. Absperrventil nach Anspruch 1 bis 11, **dadurch gekennzeichnet**, daß das Ventilgehäuse (11) aus Edelstahl gefertigt ist.
